# EUROPEAN PATENT SPECIFICATION

(11) **EP 1 840 439 B1**
(45) Date of publication and mention of the grant of the patent: **16.06.2010**
(21) Application number: 07251043.1
(22) Date of filing: 14.03.2007
(51) Int. Cl.: F16L 23/04

(54) **Clamping device**
Klemmvorrichtung
Dispositif de serrage

(30) Priority: 30.03.2006 GB 0606299
(43) Date of publication of application: 03.10.2007
(73) Proprietor: Teconnex Ltd., Keighley, BD21 4LG (GB)
(72) Inventor: Dobson, Neil, Keighley, BD21 4LG (GB)
(74) Representative: Tomkinson, Alexandra

(56) References cited:
- FR-A- 2 697 893
- US-A- 4 606 111
- US-A- 4 657 284
- US-A- 4 730 850
- US-A- 6 030 006
- US-A- 6 056 332
- US-A1- 2003 116 967

## Description

This invention relates to a clamping device for clamping two or more articles together.

Although the following description refers almost exclusively to a clamping device in the form of a G-clamp for clamping a turbo charger of a motor vehicle to an exhaust pipe, it will be appreciated by persons skilled in the art that the present invention can be used to clamp any two or more articles together, and particularly but not necessarily exclusively, to clamp two or more flanged articles together.

Currently, in order to fit a turbo charger to an exhaust pipe on a motor vehicle, a G-clamp is used comprising two semi-circular segments hinged together at a first end to allow the segments to pivot relative to each other between clamped and unclamped positions. The second or free ends of the segments can be engaged together via a nut and bolt to maintain the segments in the clamped position. In use, the flanged portions of the turbo charger and the exhaust pipe are brought into abutting relationship and held together via a first user in a required position. A second user locates the members of the G-clamp around the flanged portions and moves the engagement nut and bolt into engagement position to clamp the G-clamp around the flanged portions.

A problem with the above method is that it typically requires two people to use the clamp, thereby being a labour intensive and expensive process to undertake.

US6030006 discloses a spring biased clamping device for flanged connections. The clamp device have a plurality of arcuate segment and a pivot couples at least one end of each arcuate segment to another of the arcuate segments. A torsion spring is disposed around each pivot to bias the arcuate segments into the configuration that produces an annular structure. A rocking bolt is provided at the free ends of the segments and a biasing element biases the rocking bolt into a required position.

US4657284 discloses a remotely manipulatable clamp for clamping two pipes together. The clamp comprises two members articulated about a common pin. One end of the members are joined via a rocking bolt and the other end of the members is provided with a compression spring for closing the clamp.

US6056332 discloses clamping apparatus for engaging a pair of abutting flanges of two pipes. The apparatus includes first and second clamp portions joined to a pivot end at one end of the members and a rocking bolt is provided at the other end of the members to join the same together. A spring wire is engaged with the clamping portions to bias the clamping portions to a closed position.

US4730850 discloses a quick release coupling device for securing end flanges of two adjacent pipes together. The device includes a plurality of clamping members, each member having a spring to resiliently urge the clamping members outwardly of the end flanges. Each clamping member also has connecting members for connecting adjacent pairs of clamping members together so as to form an annulus with a gap between two end clamping members. Coupling means are disposed in the gap for releasably connecting one end to the other end against the bias of the clamping members.

US2003/0116967 discloses a self aligning coupling assembly for mating a pair of corresponding flanged pipe ends together. The coupling comprises first and second arms pivotally connected to each other at one end. A flange fitting is provided on one of the pipe ends on which the coupling is to be used and the first and second arm members are located adjacent to the flange fitting in use. In one embodiment where a mounting flange on the pipes is not used, a garter spring is provided around the first and second arms to bias the arms to a closed position around the pipe ends.

FR2697893 discloses a quick-joining clamp consisting of two pivoting rigid half collars which are attached to a fork end which pivots about a shaft. At the free end of the half collars a clamping bolt with a wing nut is arranged. The inside of the half collars is provided with a groove which on tightening up the collar squeezes together the flanges provided on the ends of the pipes. A spring biases the two collars to a clamped position in use. The mounting shaft for the fork end is extended to be fixed to one of the pipes to be joined in a way that the half collars are situated in the plane of the joint.

It is therefore an aim of the present invention to provide a clamping device which is easy to use and which in one aspect can be fitted by a single user.

It is a further aim of the present invention to provide a method of using a clamping device.

According to a first aspect of the present invention there is provided a clamping device according to claim 1.

The biasing means allows the device to automatically move to a clamped position when fitted, thereby removing the requirement of a user manually moving the same to a clamped position. This makes the clamping device easier and quicker to use and can be fitted by a single user.

In the unclamped position, one or more ends of a member are typically located a spaced distance apart from an adjacent member. In the clamped position, the one or more ends of said member are moved into engagement with, into abutting relationship with and/or moved such that the spaced distance is reduced with respect to an adjacent member.

Movement of the members from the unclamped position to the clamped position typically reduces the diameter or dimensions defined by or within said members, thereby allowing clamping of two or more articles located within said clamping members. For example, at least one aperture can be defined by or between said members and the dimensions of said aperture are reduced when said device moves from said unclamped to said clamped position.

In one embodiment the two or more members are hingedly or pivotably connected to each other, directly or indirectly, to allow rotation or pivoting of said members between said clamped and unclamped positions. For example, ends of the members can be movably mounted via a link plate. The link plate typically includes a plate including one or more apertures defined therein, such as an aperture defined at each end of the plate. The ends of the members are typically movably mounted in the apertures.

In one embodiment two or more members are connected together by connection means and said connection means are movable to allow the members to move between said clamped and unclamped positions.

The resilient biasing means can include any or any combination of one or more springs, sprung material, elastic, rubber and/or the like.

Preferably the resilient biasing means are provided over, across or are associated with the connection point or points connecting the two or more members together, such as for example, over the hinge joining the two members together. The biasing means typically provide a compressive force over or across the connection means of the members biasing the members together.

Engagement means are provided to maintain the members in at least a clamped position. The engagement means can be associated with the connection means, link plate and/or hinge or pivot connection but preferably the engagement means are associated with free ends of the members, and preferably opposite to the hinge or pivot connection. The engagement means can, in one embodiment be used to maintain the members in an unclamped position.

The engagement means can include any or any combination of one or more clips, ties, welding, adhesive, nut and bolt, screw and/or the like.

According to the invention separation means are provided to maintain said members in an unclamped position. Preferably the separation means are provided between the free ends of the two or more members. The separation means are detachably attached to the device or to one or more members of the device, such that removal of said separation means moves the members from an unclamped position to a clamped position under the bias of the resilient biasing means. Thus, the separation means are of such a form so as to provide sufficient force to overcome the bias of the resilient biasing means when fitted to the device.

The separation means can include any or any combination of one or more screws, clips, bolts and/or the like.

The resilient biasing means can be attached to the device via any suitable means, such as adhesive, welding, one or more screws, nut & bolt, inter-engaging means and/or the like. In one embodiment the resilient biasing means are detachably attached to said device.

Preferably the clamping device is provided with mounting means for allowing the device to be mounted in, on or with respect to a required position or surface in use. The device is typically mounted prior to movement of the device from the unclamped to the clamped position.

The mounting means typically protrudes outwardly from a surface of the device to allow a substantial part of the device to be mounted a spaced distance from a suitable surface or article.

In one embodiment the mounting means is in the form of or includes a plate, such as a weld plate, to allow the device to be welded in a required location prior to actuation of the clamping device.

The mounting means can be attached to one or more of the members, to the resilient biasing means, to connection means connecting the members together and/or the like.

Preferably the clamping device is in the form of a G-clamp with two substantially semi-circular members, the two members being preferably hingedly connected together.

The mounting means allows the clamping device to be mounted to a suitable surface in the locality in which it is to be fitted prior to moving the clamping device between unclamped and clamped positions. As such, a user can mount the device and then have their hands free to actuate the clamping device and/or move the two articles together with respect to the clamping device to a required position without the need to have an additional user to help fit the same.

The mounting means and resilient biasing means can be used independently of each other or in combination with each other to provide an improved clamping device.

According to a further aspect of the present invention there is provided a method of using a clamping device according to claim 21.

Embodiments of the present invention will now be described with reference to the accompanying figures, wherein:
Figure 1 is an enlarged plan view of a clamping device according to the present invention;
Figures 2a-2g illustrate a side view, plan view, end view, perspective view, detailed view of the engagement means, detailed view of the hinge and cross sectional view taken along line X-X in figure 2b of the device in figure 1 respectively; and
Figure 3 is a plan view of a clamping device with separation means according to one embodiment of the present invention.

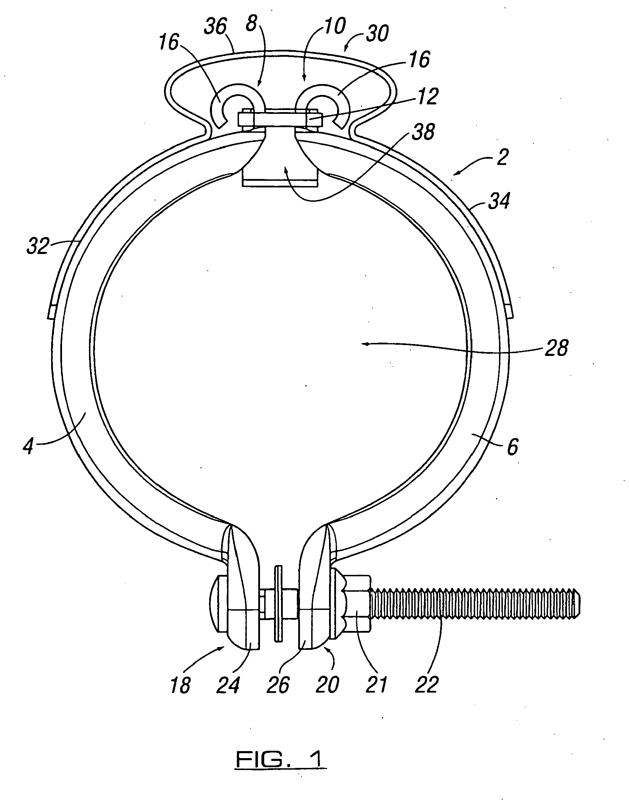

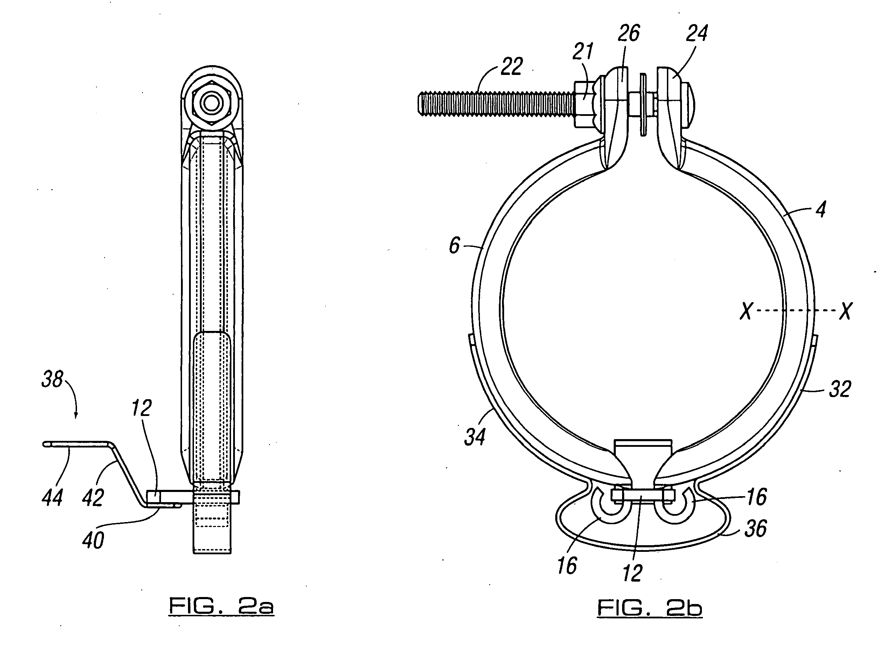

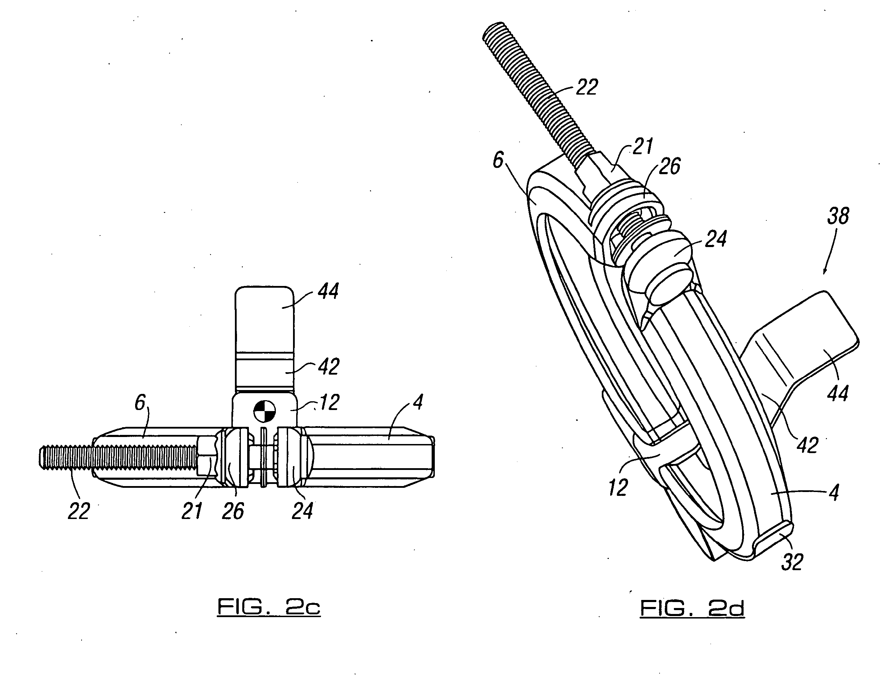

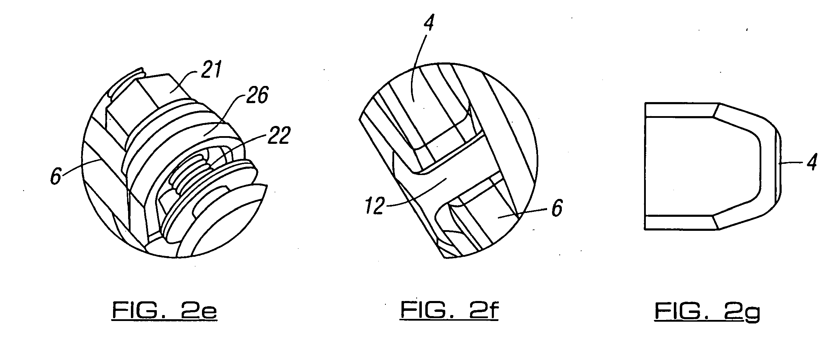

Referring to figures 1-2g, there is illustrated a clamping device in the form of a G-clamp 2 having first and second members or segments 4, 6. The G-clamp is used to clamp two or more flanged articles together.

First and second members 4, 6 are hingedly connected at ends 8, 10 thereof via a link member 12 having slots 14 defined therein for location of ends 8, 10 therethrough. The free ends 8, 10 are formed into a hook 16 to prevent removal of the same from link member 12. As such, members 4, 6 can be pivoted about link member 12 between clamped and unclamped positions.

Ends 18, 20 of members 4, 6, opposite to ends 8, 10 respectively, are joined together via engagement means in the form of a nut 21 and bolt 22 which passes through an aperture defined in end plates 24, 26 of ends 18, 20. More particularly, end plates 24, 26 protrude outwardly of the aperture 28 defined between members 4, 6, such that said plates are substantially parallel to each other. The nut and bolt 21, 22 allows the members 4, 6 to be maintained in a clamped position and can also be used to restrict pivotal movement of the members 4, 6 in the unclamped position.

In the unclamped position, ends 18, 20 are a spaced distance apart and the dimensions of aperture 28 are relatively large, thereby allowing members 4, 6 to be located around two flanged articles. In the clamped position, ends 18, 20 are moved towards each other such that they engage, abut or are a smaller distance apart than in the unclamped position to allow the two flanged articles to be secured together. In moving ends 18, 20 together, the dimensions of aperture 28 are reduced, thereby providing a clamping force on the two flanged articles around which the device is placed.

In the illustrated example, members 4, 6 are substantially semi-circular in form such that when joined together form a substantially circular aperture 28 between the same. End plates 24, 26 are formed to protrude outwardly of aperture 28 and are substantially perpendicular to the semi-circular member end to which they communicate with, are joined to or are integral with. However, members 4, 6 could be any suitable shape to form an aperture of any suitable shape, such as square, rectangular and/or the like.

In accordance with a first aspect of the present invention, resilient biasing means in the form of sprung closure clip 30 is joined to members 4, 6 to bias the members to a clamped position. More particularly, clip 30 has end portions 32, 34, joined to the outer surface of members 4, 6 via spot welding. A middle portion 36 is provided between end portions 32, 34 and is located over hinge link member 12. Clip 30 biases members 4, 6 to the clamped position, such that when the clips are located in position around the two articles to be joined together, the clip automatically clamps the members around said articles. The engagement means can then be moved to an engaged position to secure the members in the clamped position.

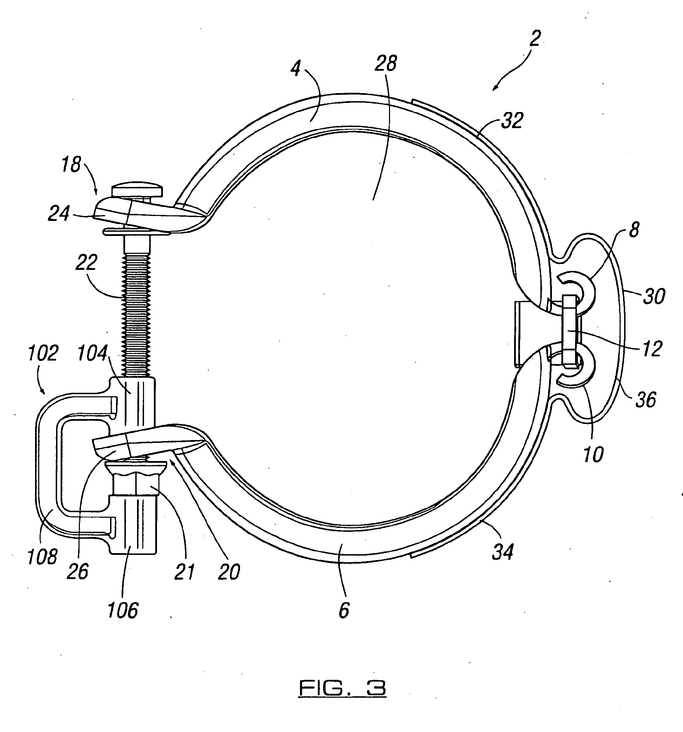

Separation means are located between end plates 24, 26 of members 4, 6 to maintain the members in an unclamped position if required during the process of fitting the clamping device around the articles. The separation means are detachably attached to the device or member(s) to allow easy removal of the same. The separation means are in addition to the engagement means associated with the end plates. An example of separation means is described in more detail below with reference to figure 3.

In accordance with a further embodiment of the present invention there is provided mounting means in the form of a welding plate 38. Welding plate 38 protrudes outwardly of the device to allow the device to be welded relative to one or both of the articles to be joined together in use. By welding the device prior to moving the clamping device between the unclamped and clamped positions, the device can be located in a required position without a person having to hold the same. This frees up a user's hand to move the two articles together into a clamped position without requiring an additional user to help fit the clamp.

The welding plate can be provided in any suitable, size, shape, design and can be provided in any suitable position on the device. In the illustrated example, welding plate 38 is joined to link plate 12 and includes a first connection portion 40, an intermediate portion 42 and a second connection portion 44 which is welded to a required surface in use. Intermediate portion 42 positions second connection portion 44 a spaced distance apart from first connection portion 40 and is of such a size and angle to allow the device to be located at a suitable angle and distance from the surface to which second connection portion 44 is to be joined in use.

The members can be formed or any suitable material and can be of any shape to define an aperture of any suitable size or shape. The resilient biasing means can also be of any suitable size, shape and design and in the illustrated example of the present invention is formed of sprung stainless steel so as to withstand relatively high temperatures associated with the application of joining a turbo charger of a motor vehicle to an exhaust pipe.

Thus, in use of the device, a user welds the weld plate 38 to a suitable surface and moves the device to the unclamped position. The user brings the two flanged articles together in a required position and/or orientation, such that the parts of the articles to be joined are located through the aperture defined by the clamping members. Whilst holding the articles in place, the user removes the separation means holding the members in an unclamped position and the bias of the resilient biasing means moves the members to a clamped position around the articles.

Referring to figure 3, G-Clamp 2 is illustrated with separation means in the form of a clip 102 which acts to maintain ends 18, 20 of members 4, 6 in an unclamped position More particularly, clip 102 has a first end 104 clipped to a portion of bolt 22 between ends 18, 20, and preferably abutting inner surface of end 20, and a second end 106 abutting against nut 21. The nut 21 also abuts against outer surface of end 20. A U-shaped linking arm 108 is provided between ends 104, 106. Arm 108 is typically U-shaped so as to avoid any obstruction or interference with end 26 of member 6 but it could be any suitable shape.

With clip 102 in place, free end 20 of member 6 is maintained a spaced distance apart from free end 18 of member 4 since the clip acts against the resilient bias of closure clip 30. In addition, nut 21 is maintained in position on the free end of bolt 22 and the engagement means are in an unclamped position. Removal of clip 102 allows free ends 18, 20 to move towards each other automatically under the bias of closure clip 30. This removes the requirement for a user to have a free hand to manually move the ends 18, 20 together, thereby allowing the user to maintain the items being clamped together in a suitable position during the clamping process.

## Claims

1. A clamping device (2) for clamping two or more articles together, said clamping device including two or more members (4, 6) movable between an unclamped position and a clamped position, resilient biasing means (30) are provided on or associated with said clamping device (2) to bias the two or more members (4, 6) to said clamped position in use, and engagement means (21, 22) are provided to maintain the members (4, 6) in the clamped position, **characterised in that** in addition to the engagement means (21, 22), the clamping device includes separation means (102) for maintaining the members (4, 6) and the engagement means (21, 22) in the unclamped position, said separation means (102) being detachably attached the device (2) such that removal of the separation means (102) from the device (2) moves the members (4, 6) from the unclamped position to the clamped position under the bias of the resilient biasing means (30).

2. A clamping device according to claim 1 **characterised in that** in the unclamped position, one or ends (18, 20) of a member (4, 6) arc a spaced distance apart from one or more ends of an adjacent member.

3. A clamping device according to claim 2 **characterised in that** in the clamped position, the ends (18, 20) of the members (4, 6) are moved into engagement, into abutting relationship and/or moved such that a spaced distance between the ends is reduced compared to in the unclamped position.

4. A clamping device according to claim 1 **characterised in that** at least one aperture (28) is defined by or between the two or more members (4, 6) and the dimensions of said aperture are reduced as the device is moved from the unclamped position to the clamped position.

5. A clamping device according to claim 1 **characterised in that** the two or more members (4, 6) are hingedly or pivotably connected, either directly or indirectly to each other, to allow rotation or pivoting of said members between said clamped and unclamped positions.

6. A clamping device according to claim 1 **characterised in that** the two or more members (4, 6) are movably mounted to each other via a link plate (12).

7. A clamping device according to claim 6 **characterised in that** the link plate (12) has one or more apertures (14) defined therein and each end (8, 10) of each member (4, 6) is movably mounted in said one or more apertures.

8. A clamping device according to claim 1 **characterised in that** the two or more members (4, 6) are connected together by connection means and said connection means are movable to allow the members to move between said clamped and unclamped position.

9. A clamping device according to claim 1 **characterised in that** the resilient biasing means (30) includes any or any combination of one or more springs, sprung material, elastic or rubber.

10. A clamping device according to claim 1 **characterised in that** the resilient biasing means (30) are provided over, across or are associated with the connection point or points connecting the two or more members (4, 6) together.

11. A clamping device according to claim 1 **characterised in that** the engagement means are associated with the free ends (18, 20) of the members (4, 6).

12. A clamping device according to claim 1 **characterised in that** the engagement means is a nut and bolt (21, 22).

13. A clamping device according to claim 1 **characterised in that** the separation means are located between the free ends (18, 20) of said members (4, 6).

14. A clamping device according to claim 1 **characterised in that** the separation means includes one or more clips (102).

15. A clamping device according to claim 1 **characterised in that** the resilient biasing means are attached to the device (2) via welding, adhesive, one or more screws, nut and bolt and/or inter-engaging means.

16. A clamping device according to claim 1 **characterised in that** mounting means arc provided to allow the device to be mounted in a required position on or with respect to an article or surface in use.

17. A clamping device according to claim 16 **characterised in that** the mounting means protrude outwardly from a surface of the device.

18. A clamping device according to claim 17 **characterised in that** the mounting means is in the form of a plate (38).

19. A clamping device according to claim 1 **characterised in that** the device (2) is in the form of a G-Clamp with two substantially semi-circular members (4, 6).

20. A clamping device according to claim 1 **characterised in that** the engagement means is in the form of a nut and bolt (21, 22) and the separation means is in the form of a clip (102), a first end (104) of the clip is clipped to the bolt and a second end (106) of the clip abutting against the nut when in use in the unclamped position.

21. A method of using a clamping device (2) for clamping two or more articles together, said clamping device including two or more members (4, 6) movable between an unclamped position and a clamped position and said method including the steps of locating the device (2) around said articles being clamped and allowing said members (4, 6) to move from said unclamped position to said clamped position under the resilient biasing force of resilient biasing means (30) provided on or associated with said clamping device, removing separation means (102) from the device (2) used for maintaining the members (4, 6) and engagement means (21, 22) in the unclamped position, such that the device (2) moves the members (4, 6) from the unclamped position to the clamped position under the bias of the resilient biasing means (30) and using engagement means (21, 22) to maintain the members (4, 6) in the clamped position.

## Patentansprüche

1. Klemmvorrichtung (2) zum Zusammenklemmen von zwei oder mehr Artikeln, wobei die genannte Klemmvorrichtung zwei oder mehr Elemente (4, 6) hat, die zwischen einer gelösten Position und einer festgeklemmten Position bewegbar sind, federnde Vorspannmittel (30) an der genannten Klemmvorrichtung (2) bereitgestellt oder mit ihr assoziiert sind, um die zwei oder mehr Elemente (4, 6) im Gebrauch auf die genannte festgeklemmte Position vorzuspannen, und Eingriffsmittel (21, 22) bereitgestellt sind, um die Elemente (4, 6) in der festgeklemmten Position zu halten, **dadurch gekennzeichnet, dass** die Klemmvorrichtung zusätzlich zu den Eingriffsmitteln (21, 22) Trennvorrichtungen (102) aufweist, um die Elemente (4, 6) und die Eingriffsmittel (21, 22) in der gelösten Stellung zu halten, und wobei die genannten Trennvorrichtungen (102) abnehmbar an der Vorrichtung (2) angebracht sind, so dass das Entfernen der Trennvorrichtungen (102) von der Vorrichtung (2) die Elemente (4, 6) unter der Vorspannung der federnden Vorspannmittel (30) von der gelösten Position in die festgeklemmte Position bewegt.

2. Klemmvorrichtung nach Anspruch 1, **dadurch gekennzeichnet, dass** in der gelösten Position ein oder mehrere Enden (18, 20) eines Elements (4, 6) um einen Abstand von einem oder mehreren Enden eines benachbarten Elements beabstandet ist bzw. sind.

3. Klemmvorrichtung nach Anspruch 2, **dadurch gekennzeichnet, dass** in der festgeklemmten Position die Enden (18, 20) der Elemente (4, 6) miteinander in Eingriff bewegt werden, in aneinanderstoßender Beziehung zueinander und/oder so bewegt werden, dass ein Abstand zwischen den Enden im Vergleich zu dem in der gelösten Position verringert wird.

4. Klemmvorrichtung nach Anspruch 1, **dadurch gekennzeichnet, dass** wenigstens eine Öffnung (28) von oder zwischen den zwei oder mehr Elementen (4, 6) definiert wird und die Maße der genannten Öffnung reduziert werden, während die Vorrichtung von der gelösten Position in die festgeklemmte Position bewegt wird.

5. Klemmvorrichtung nach Anspruch 1, **dadurch gekennzeichnet, dass** die zwei oder mehr Elemente (4, 6) entweder direkt oder indirekt gelenkig oder drehbar miteinander verbunden sind, um das Drehen bzw. Schwenken der genannten Elemente zwischen der genannten festgeklemmten und gelösten Position zuzulassen.

6. Klemmvorrichtung nach Anspruch 1, **dadurch gekennzeichnet, dass** die zwei oder mehr Elemente (4, 6) über ein Verbindungsglied (12) beweglich aneinander montiert sind.

7. Klemmvorrichtung nach Anspruch 6, **dadurch gekennzeichnet, dass** in dem Verbindungsglied (12) eine oder mehrere Öffnungen (14) definiert sind und jedes Ende (8, 10) jedes Elements (4, 6) beweglich in der/den genannten einen oder mehreren Öffnungen montiert ist.

8. Klemmvorrichtung nach Anspruch 1, **dadurch gekennzeichnet, dass** die zwei oder mehr Elemente (4, 6) durch Verbindungsmittel miteinander verbunden sind und die genannten Verbindungsmittel beweglich sind, so dass die Elemente sich zwischen der genannten festgeklemmten und gelösten Position bewegen können.

9. Klemmvorrichtung nach Anspruch 1, **dadurch gekennzeichnet, dass** das federnde Vorspannmittel (30) beliebig eine oder mehrere Federn, federndes Material, elastisches Material oder Gummi oder eine beliebige Kombination von diesen aufweist.

10. Klemmvorrichtung nach Anspruch 1, **dadurch gekennzeichnet, dass** die federnden Vorspannmittel (30) auf, über oder in Assoziation mit dem/den Verbindungspunkt oderpunkten bereitgestellt sind, der/die die zwei oder mehr Elemente (4, 6) miteinander verbindet/verbinden.

11. Klemmvorrichtung nach Anspruch 1, **dadurch gekennzeichnet, dass** die Eingriffsmittel mit den freien Enden (18, 20) der Elemente (4, 6) assoziiert sind.

12. Klemmvorrichtung nach Anspruch 1, **dadurch gekennzeichnet, dass** das Eingriffsmittel eine Mutter und Schraube (21, 22) ist.

13. Klemmvorrichtung nach Anspruch 1, **dadurch gekennzeichnet, dass** sich die Trennvorrichtungen zwischen den freien Enden (18, 20) der genannten Elemente (4, 6) befinden.

14. Klemmvorrichtung nach Anspruch 1, **dadurch gekennzeichnet, dass** die Trennvorrichtung ein oder mehrere Klammern (102) aufweist.

15. Klemmvorrichtung nach Anspruch 1, **dadurch gekennzeichnet, dass** die federnden Vorspannmittel durch Schweißen, Klebstoff, eine oder mehrere Schrauben, Mutter und Schraube und/oder ineinandergreifende Mittel an der Vorrichtung (2) angebracht sind.

16. Klemmvorrichtung nach Anspruch 1, **dadurch gekennzeichnet, dass** Befestigungsmittel bereitgestellt sind, so dass die Vorrichtung im Gebrauch an einer gewünschten Position an oder im Verhältnis zu einem Artikel oder einer Oberfläche montiert werden kann.

17. Klemmvorrichtung nach Anspruch 16, **dadurch gekennzeichnet, dass** die Befestigungsmittel von einer Oberfläche der Vorrichtung nach außen vorstehen.

18. Klemmvorrichtung nach Anspruch 17, **dadurch gekennzeichnet, dass** das Befestigungsmittel die Form einer Platte (38) hat.

19. Klemmvorrichtung nach Anspruch 1, **dadurch gekennzeichnet, dass** die Vorrichtung (2) die Form einer Schraubzwinge mit zwei im Wesentlichen halbkreisförmigen Elementen (4, 6) hat.

20. Klemmvorrichtung nach Anspruch 1, **dadurch gekennzeichnet, dass** das Eingriffsmittel die Form einer Mutter und Schraube (21, 22) hat und die Trennvorrichtung die Form einer Klammer (102) hat, wobei im Gebrauch in der gelösten Position ein erstes Ende (104) der Klammer an die Schraube geklemmt ist und ein zweites Ende (106) der Klammer an der Mutter in Anlage ist.

21. Verfahren zur Verwendung einer Klemmvorrichtung (2) zum Zusammenklemmen von zwei oder mehr Artikeln, wobei die genannte Klemmvorrichtung zwei oder mehr Elemente (4, 6) hat, die zwischen einer gelösten Position und einer festgeklemmten Position bewegbar sind, und wobei das genannte Verfahren die Schritte des Ansetzens der Vorrichtung (2) um die genannten Artikel, die festgeklemmt werden, und des Bewegenlassens der genannten Elemente (4, 6) unter der federnden Vorspannkraft von federnden Vorspannmitteln (30), die an der genannten Klemmvorrichtung (2) bereitgestellt oder mit ihr assoziiert sind, von der genannten gelösten Position in die genannte festgeklemmte Position, des Entfernens der Trennvorrichtungen (102) von der Vorrichtung (2), die zum Halten der Elemente (4, 6) und der Eingriffsmittel (30) in der gelösten Position verwendet werden, so dass die Vorrichtung (2) die Elemente (4, 6) unter der Vorspannung der federnden Vorspannmittel (30) von der gelösten Position in die festgeklemmte Position bewegt, und des Verwendens von Eingriffsmitteln (21, 22) zum Halten der Elemente (4, 6) in der festgeklemmten Position aufweist.

## Revendications

1. Dispositif de serrage (2) pour serrer l'un contre l'autre deux ou plusieurs articles, ledit dispositif de serrage englobant deux ou plusieurs éléments (4, 6) aptes à se déplacer entre une position desserrée et une position serrée, des moyens de poussée élastiques (30) sont prévus sur ledit dispositif de serrage (2), ou associés à celui-ci, afin de pousser les deux ou plusieurs éléments (4, 6) vers ladite position serrée lors de l'utilisation, et des moyens d'engagement (21, 22) sont prévus pour maintenir les éléments (4, 6) dans la position serrée, **caractérisé en ce qu'**en plus des moyens d'engagement (21, 22), le dispositif de serrage comporte des moyens de séparation (102) pour maintenir les éléments (4, 6) et les moyens d'engagement (21, 22) dans la position desserrée, lesdits moyens de séparation (102) étant attachés de façon détachable au dispositif (2) de sorte que l'enlèvement des moyens de séparation (102) au niveau du dispositif (2) va déplacer les éléments (4, 6) depuis la position desserrée vers la position serrée sous l'effet de poussée des moyens de poussée élastiques (30).

2. Dispositif de serrage selon la revendication 1, **caractérisé en ce que** dans la position desserrée, une extrémité ou des extrémités (18, 20) d'un élément (4, 6) vient(viennent) s'arquer sur une certaine distance d'espacement par rapport à une ou plusieurs extrémités d'un élément adjacent.

3. Dispositif de serrage selon la revendication 2, **caractérisé en ce que** dans la position serrée, les extrémités (18, 20) des éléments (4, 6) sont déplacées pour se mettre en engagement, suivant une corrélation d'aboutement, et/ou sont déplacées de sorte qu'une certaine distance d'espacement entre les extrémités est réduite en comparaison à celle de la position desserrée.

4. Dispositif de serrage selon la revendication 1, **caractérisé en ce qu'**au moins une ouverture (28) est définie par, ou entre, les deux ou plusieurs éléments (4, 6) et les dimensions de ladite ouverture sont réduites au fur et à mesure que le dispositif est déplacé depuis la position desserrée vers la position serrée.

5. Dispositif de serrage selon la revendication 1, **caractérisé en ce que** les deux ou plusieurs éléments (4, 6) sont raccordés l'un à l'autre par des articulations ou des pivots, soit directement soit indirectement, afin de permettre une rotation ou un pivotement desdits éléments entre lesdites positions serrée et desserrée.

6. Dispositif de serrage selon la revendication 1, **caractérisé en ce que** les deux ou plusieurs éléments (4, 6) sont montés l'un sur l'autre de façon mobile par l'intermédiaire d'une plaque de liaison (12).

7. Dispositif de serrage selon la revendication 6, **caractérisé en ce que** la plaque de liaison (12) possède une ou plusieurs ouvertures (14) lesquelles sont définies dans celle-ci et chaque extrémité (8, 10) de chaque élément (4, 6) est montée de façon mobile dans ladite une ouverture ou lesdites plusieurs ouvertures.

8. Dispositif de serrage selon la revendication 1, **caractérisé en ce que** les deux ou plusieurs éléments (4, 6) sont raccordés l'un à l'autre par des moyens de raccordement et lesdits moyens de raccordement sont mobiles afin de permettre aux éléments de se déplacer entre ladite position serrée et desserrée.

9. Dispositif de serrage selon la revendication 1, **caractérisé en ce que** les moyens de poussée élastiques (30) comportent l'un quelconque des postes suivants, ou n'importe quelle combinaison de ces postes, à savoir un ou plusieurs ressorts, un matériau à ressort, un élastique ou du caoutchouc.

10. Dispositif de serrage selon la revendication 1, **caractérisé en ce que** les moyens de poussée élastiques (30) sont prévus au-dessus, en travers du(des) point(s) de raccordement qui raccordent l'un à l'autre les deux ou plusieurs éléments (4, 6), ou sont associés au(x) point(s) de raccordement.

11. Dispositif de serrage selon la revendication 1, **caractérisé en ce que** les moyens d'engagement sont associés aux extrémités libres (18, 20) des éléments (4, 6).

12. Dispositif de serrage selon la revendication 1, **caractérisé en ce que** les moyens d'engagement sont constitués par un écrou et un boulon (21, 22).

13. Dispositif de serrage selon la revendication 1, **caractérisé en ce que** les moyens de séparation sont positionnés entre les extrémités libres (18, 20) desdits éléments (4, 6).

14. Dispositif de serrage selon la revendication 1, **caractérisé en ce que** les moyens de séparation comportent un ou plusieurs clips (102).

15. Dispositif de serrage selon la revendication 1, **caractérisé en ce que** les moyens de poussée élastiques sont attachés au dispositif (2) grâce à une soudure, un adhésif, une ou plusieurs vis, un écrou et un boulon et/ou des moyens d'inter-engagement.

16. Dispositif de serrage selon la revendication 1, **caractérisé en ce que** des moyens de montage sont prévus pour permettre au dispositif d'être monté dans une position requise sur un article ou sur une surface en utilisation, ou par rapport à ces derniers.

17. Dispositif de serrage selon la revendication 16, **caractérisé en ce que** les moyens de montage font saillie vers l'extérieur à partir d'une surface du dispositif.

18. Dispositif de serrage selon la revendication 17, **caractérisé en ce que** les moyens de montage se présentent sous la forme d'une plaque (38).

19. Dispositif de serrage selon la revendication 1, **caractérisé en ce que** le dispositif (2) se présente sous la forme d'une pince en G avec deux éléments (4, 6) sensiblement semi-circulaires.

20. Dispositif de serrage selon la revendication 1, **caractérisé en ce que** les moyens d'engagement se présentent sous la forme d'un écrou et d'un boulon (21, 22) et les moyens de séparation se présentent sous la forme d'un clip (102), une première extrémité (104) du clip est enclipsée sur le boulon et une deuxième extrémité (106) du clip aboute contre l'écrou au moment de l'utilisation en position desserrée.

21. Procédé d'utilisation d'un dispositif de serrage (2) pour serrer l'un contre l'autre deux ou plusieurs articles, ledit dispositif de serrage englobant deux ou plusieurs éléments (4, 6) aptes à se déplacer entre une position desserrée et une position serrée, et ledit procédé englobant les étapes consistant à positionner le dispositif (2) autour desdits articles en train d'être serrés, et à permettre auxdits éléments (4, 6) de se déplacer à partir de ladite position desserrée vers ladite position serrée sous l'effet de la force de poussée élastique de moyens de poussée élastiques (30) prévus sur ledit dispositif de serrage ou associés à ce dernier, à enlever des moyens de séparation (102) au niveau du dispositif (2) lesquels sont utilisés pour maintenir les éléments (4, 6) et les moyens d'engagement (21, 22) dans la position desserrée de sorte que le dispositif (2) déplace les éléments (4, 6) depuis la position desserrée vers la position serrée sous l'effet de poussée des moyens de poussée élastiques (30) et à utiliser des moyens d'engagement (21, 22) afin de maintenir les éléments (4, 6) dans la position serrée.
